# EUROPÄISCHE PATENTSCHRIFT

(11) **EP 2 547 591 B1**
(45) Veröffentlichungstag und Bekanntmachung des Hinweises auf die Patenterteilung: **23.03.2016**
(21) Anmeldenummer: 10795228.5
(22) Anmeldetag: 09.12.2010
(51) Int. Cl.: B65C 9/06, B67B 3/26, G01N 21/90

(54) **DECKELSICHTTULPE**
COVER VIEW GRIPPER
TULIPE DE VISIBILITÉ DE COUVERCLE

(30) Priorität: 19.03.2010 DE 102010012214
(43) Veröffentlichungstag der Anmeldung: 23.01.2013
(73) Patentinhaber: KHS GmbH, 44143 Dortmund (DE)
(72) Erfinder: HERRMANN, Jürgen, 57520 Rosenheim (DE); HERRMANN, Marius, Michael, 57520 Rosenheim (DE)
(86) Internationale Anmeldenummer: PCT/EP2010/007501
(87) Internationale Veröffentlichungsnummer: WO 2011/113463

(56) Entgegenhaltungen:
- WO-A1-2010/022838
- WO-A2-03/024808
- DE-A1-102009 003 649
- DE-U1-202005 006 755

## Beschreibung

Die Erfindung betrifft eine Behälterbehandlungsvorrichtung, insbesondere Etikettiervorrichtung für Flaschen, Behälter usw. welche zumindest eine Zentriervorrichtung mit einer Standfläche und einer Packtulpe aufweist, wobei zumindest ein Erfassungs- und Steuersystem, aufweisend zumindest ein optisches System, vorgesehen ist. Die Erfindung betrifft aber auch ein Verfahren zur Inspektion, insbesondere ein Verfahren zur Deckelsitzinspektion.

Eine gattungsgemäße Vorrichtung und ein entsprechendes Verfahren sind aus der WO 2010/ 022838 A1 bekannt.

Die DE 3 308 489 A1 beschreibt eine Zentriervorrichtung für aufrecht stehende Gefäße, insbesondere in Etikettiermaschinen, mit einer Standplatte, die gegen Federkraft aus einer durch einen Anschlag fixierten oberen Endlage nach unten bewegbar ist. Die Standplatte ist von einem Zentrierring umgeben, welcher eine an den Gefäßquerschnitt angepasste, trichterartige Zentrierfläche aufweist. Eine Zentrierglocke ist mittels einer Steuereinrichtung heb- und senkbar, wobei die Gefäße mittels der Zentrierglocke gegen die Standplatte und den Zentrierring gedrückt werden. Um eine exakte Zentrierung und auch eine konstante Höhenlage des Gefäßbodens zu erreichen, schlägt die DE 3 308 489 A1 vor, dass die Standplatte eine durch einen Anschlag fixierte untere Endlage aufweist, und dass der Zentrierring höhenbeweglich gelagert und gegen Federkraft aus einer durch einen Anschlag definierten oberen Endlage nach unten bewegbar ist, und dass die Steuereinrichtung für die Zentrierglocke derart ausgebildet ist, dass die Standplatte beim Absenken der Gefäße ihre untere Endlage erreicht.

Gefäße bzw. Behälter können beispielsweise als Flaschen für Flüssigkeiten, beispielsweise für Getränke verwendet werden. Die Behälter z.B. Flaschen können aus einem transparenten oder transluzenten Material, beispielsweise aus Glas oder aus einem transluzenten Kunststoff, z.B. PET bestehen. Denkbar ist aber auch, dass die Behälter aus anderen Materialien bestehen und mit anderen Füllgütern befüllbar sind.

Die befüllten Behälter werden der Eingangs genannten Behälterbehandlungsvorrichtung z.B. einer Etikettiermaschine zugeführt. An einer Ausrichtstation werden die Behälter vor dem Etikettieren in eine bestimmte Lage verdreht, so dass die Etiketten stets in einer gleichen Position auf dem jeweiligen Behälter angeordnet sind. Dies wird dadurch erreicht, in dem die Ausrichtstation zumindest ein Erfassungssystem, bevorzugt mehrere Erfassungssysteme aufweist, welche Gestaltungsmerkmale z.B. so genannte Embossings des Behälters erkennt, zu denen die Etiketten oder andere Kennzeichnungen ausgerichtet und genauestens positioniert sein sollen. Mittels des zumindest einen Erfassungssystems, bevorzugt mittels mehrerer Erfassungssysteme wird der gesamte Umfang des Behälters erfasst, wobei die Behälter auf den Standflächen z.B. in der Ausgestaltung als Drehteller gelagert drehend an den Erfassungssystemen vorbeigeführt werden. Haben die Behälter das bzw. die Erfassungssysteme passiert, werden die Behälter entsprechend mittels des von dem Erfassungssystem generierten Signals über die Drehteller in die gewünschte Position verdreht. Ist der Behälter korrekt ausgerichtet wird dieser so etikettiert, dass die Etiketten bevorzugt zu den Gestaltungsmerkmalen (Embossings) stets gleich und gewünscht ausgerichtet sind.

Vor dem Etikettieren wurde der Behälter in einer Behälterbehandlungsvorrichtung z.B. in der Ausgestaltung als Verschließer mittels eines Verschlusselementes verschlossen. Auch der beispielhafte Verschließer kann einen Drehteller und eine Packtulpe aufweisen, womit der Behälter aufrecht stehend sicher gehalten ist.

Denkbar ist, dass das Verschlusselement auf seiner Decke ein Dekor oder Erkennungszeichen, zum Beispiel ein Zeichen eines Getränkeherstellers aufweist. Wie die Praxis zeigt, sind die Verschlusselemente mit ihren auf der Decke angeordneten Erkennungszeichen aber bezogen auf die Gestaltungsmerkmale des Behälters und somit auch zu den Etiketten zufällig aufgebracht, also quasi verdreht. Dies ergibt ein insgesamt störendes Bild des Behälters bezogen auf die nach dem Verschließen sorgfältig und mit großem Aufwand ausgerichteten Behälter und darauf aufgebrachten Etiketten oder dergleichen Kennzeichnungen.

Bekannt sind aber auch Behälter, welche keine Gestaltungsmerkmale (Embossings) oder dergleichen aufweisen, so dass eine Ausrichtung der Behälter bezüglich eines stets gleichen Anordnens von Etiketten oder dergleichen Kennzeichen entfällt. Damit sind die Etiketten aber nachteiliger Weise auf jedem Behälter unterschiedlich angeordnet. In Zusammenschau mit den Verschlusselementen, welche ebenfalls bezogen auf die Etiketten oder dergleichen Kennzeichen nicht ausgerichtet sind, ergibt sich für den Verbraucher so ein sehr unruhiges Gesamterscheinungsbild, wodurch die Optik des Behälters gestört und die Wahrnehmung des Verbrauchers beeinträchtigt ist. Dies wird insbesondere verstärkt, wenn das Verschlusselement Kennzeichen trägt, welche wie die beispielhaften Etiketten zum Beispiel auf die Erzeuger des Behälterinhalts oder auf den Behälterinhalt selbst hinweisen. Hierzu ist aus der WO 2010/0228338 A1 eine Vorrichtung zum Erfassen eines Deckeldekors und zum Ausrichten des Behälters anhand der Position des Deckeldekors vor dem Etikettieren bekannt. Diese offenbart ein optisches System, das vor dem Aufsetzen der Packtulpe oder durch eine transparente bzw. eine hohlwellige Packtulpe hierdurch die Position eines Deckeldekors erfasst.

Das bzw. die Erfassungssysteme sind als separate Inspektionsvorrichtungen ausgeführt, weiche unter umständen die Baugröße der Behälterbehandlungsvorrichtung erweitern, was nachteilig hinsichtlich der üblicher Weise beengten Bauraumverhältnisse ist. Mittels einer separaten Inspektionsvorrichtung wird zudem die Position des Deckels auf dem Behälter überwacht. Möglich ist nämlich, dass das Verschlusselement einen Fehlsitz aufweist, also den Behältern nicht korrekt verschließt. Insofern werden die Behälter noch einer Qualitätskontrolle unterzogen.

Der Erfindung liegt die Aufgabe zugrunde eine Behälterbehandlungsvorrichtung und ein Verfahren der eingangs genannten Art mit einfachen Mitteln so zu verbessern, dass die Erfassungsgenauigkeit eines Dekors auf einem Deckel eines Behälters und eine Ausrichtung dos Behälters zu dem Dekor verbessert wird.

Erfindungsgemäß wird die Aufgabe durch eine Behälterbehandlungsvorrichtung mit den Merkmalen des Anspruchs 1 gelöst, wobei die Packtulpe sowohl kopfseitig als auch fußseittg Durchsichtöffnungen aufweist, und zumindest eine Lichtquelle vorgesehen ist, und die Packtulpe mindestens teilweise lichtleitend ausgebildet ist oder zumindest lichtieltende Elemente umfasst bzw. enthält, so dass eine Oberfläche, insbesondere eine Deckelselte durch das optische System und durch die Durchsichtöffnungen hindurch und mittels der lichtleitenden Ausgestaltung oder mittels der lichtleitenden Elemente ein ausgeleuchteter Innenbereich inspizierbar ist. Die Lösung der Aufgabe gelingt aber auch mit einem Verfahren mit den Merkmalen des Anspruchs 13.

Vorteilhaft wird mit der Erfindung eine hohlwellige Packtulpe zur Verfügung gestellt, welche in Zusammenwirken das Lichtleitelementes bzw. der lichtleitenden Ausbildung mit der Lichtquelle zumindest bereichsweise "erstrahlt". Zudem ist zweckmäßiger Weise vorgesehen, dass in der bevorzugt feststehenden Kopfplatte korrespondierend zum optischen System eine Plattenöffnung eingebracht ist. So kann das optische System z.B. in der Ausgestaltung als Kamera von oben durch die Kopfplatte (Plattenöffnung) und die Packtulpe hindurch auf den vorteilhaft homogen ausgeleuchteten Innenbereich der Packtulpe z.B. auf das Verschlusselement bzw, auf den ausgeleuchteten Deckel "schauen", und dessen Position aufnehmen. Ein weiterer Vorteil bezüglich des oberhalb der Kopfplatte angeordneten optischen Systems ist darin zu sehen, dass so die Baubreite, also die radiale Erstreckung der Behälterbehandlungsvorrichtung nicht beeinträchtigt, also nicht erweitert wird. In einer mit dem optischen System verbundenen Bildverarbeitungs- und Steuereinheit, kann so die korrekte Lage hinsichtlich der Verschlusswirkung (Qualitätskontrolle), aber auch bezüglich auf den jeweiligen Behälter aufzubringender Etiketten oder Aufdrucke verifiziert werden. Hierzu generiert die Bildverarbeitungs- und Steuereinheit ein entsprechendes Signal zum positionieren entweder des Behälters oder des Verschlusselementes in die erforderliche Position.

Im Falle des Verschließers, kann das zunächst auf eine Behältermündung aufgelegte Verschlusselement durch bzw. mittels der Packtulpe ausgerichtet werden. Möglich ist aber auch, den Behälter relativ zum Verschlusselement in seiner Position zu verändern z.B. zu verdrehen, was sowohl für die Etikettiermaschine bzw. -vorrichtung als auch für den Verschließer entsprechend gilt. Denkbar ist auch, die Position des Verschlusselementes dem jeweiligen Behälter zugeordnet zu speichern, und zum Beispiel das entsprechende Signal an eine nachfolgende Ausrichtstation zu leiten, in welcher dann eine Ausrichtung der verschlossenen Flasche gemäß dem Verschlussdekor erfolgt (Drehteller/Packtulpe). Die Ausrichtstation kann der Etikettiermaschine zugeordnet sein, wobei aber jeder Drehteller mit zugeordneter Packtulpe eine entsprechende Ausrichtung bewirken kann. Auch eine Signalweiterleitung zum Ausschleusen von Behältern mit inkorrekt sitzendem Verschlusselement ist denkbar.

In bevorzugter Ausgestaltung ist das optische System bzw. die Kamera stationär an der Behälterbehandlungsvorrichtung, also zum Beispiel an dem Verschließer und/oder an der Etikettiermaschine, angeordnet, so dass die zu inspizierenden Behälter relativ zu dem optischen System an diesem vorbeigeführt werden. Beispielsweise reicht so ein einziges optisches System aus, wenn dieses an einer Etikettiermaschine z.B. in der Ausgestaltung als Etikettierkreisel angeordnet ist, wobei dabei selbstverständlich alle Packtulpen des Etikettierkreisels als hohlwellige Packtulpe ausgeführt sein sollten.

In bevorzugter Ausgestaltung kann vorgesehen sein, auch die zumindest eine Lichtquelle stationär anzuordnen. Zweckmäßig ist, wenn die Lichtquelle dabei so zur vorbeifahrenden Packtulpe angeordnet ist, dass deren Tulpenglocke von der Lichtquelle angestrahlt wird. Die Lichtquelle kann bei dieser Ausgestaltung bezogen auf die Mittelachse des Etikettierkreisels zumindest einseitig seitlich, bevorzugt mehrseitig seitlich radial innen und/oder radial außen angeordnet sein, wobei bei der mehrseitigen Anordnung möglicherweise auch mehrere Lichtquellen vorteilhaft sein können. Insofern ist die Lichtquelle zweckmäßiger Weise bezogen auf die Mittelachse der Behälterbehandlungsvorrichtung innerhalb zwischen deren Mittelachse und den vorbeifahrenden Packtulpen angeordnet, so dass auch hier bauraumbedingte Vorteile erreichbar sind. Günstiger Weise ist die Tulpenglocke dabei als Lichtleitelement ausgeführt, welches das seitlich radial eingekoppelte Licht so weiterleitet, dass der Innenbereich der Tulpenglocke bevorzugt homogen ausgeleuchtet ist. Die Tulpenglocke kann zum Beispiel mindestens teilweise, insbesondere vollständig aus einem transparenten Material (z.B. Plexiglas) oder aus Makroion gebildet sein, um lediglich beispielhaft, nicht einschränkende Materialbeispiele zu nennen.

Möglich ist, dass die Tulpenglocke, bzw. die zumindest teilweise, insbesondere vollständig transparente Tulpenglocke für einen optimalen Lichteintritt zumindest teilweise nicht-konvexe Flächen aufweist, wobei die Tulpenglocke auch als polyedrisch-konischer Körper ausgeführt sein kann. Denkbar ist, wenn eine korrelierende Licht Anordnung, z.B. als konkaves Lichtfeld eingesetzt wird, um einen optimalen Lichteintritt und eine maximale Vergleichmäßigung bzw. Streuung an der Austrittseite zu erreichen. Möglich ist auch die Innenfläche der Tulpenglocke, aus welcher das eingekoppelte Licht ausgekoppelt wird mit einem Diffusor zu versehen, um eine weitere Verbesserung der homogenen Ausleuchtung zu erreichen.

Als Lichtquelle können zum Beispiel LED's und/oder andere geeignete Lichtquellen eingesetzt werden, welche synchron zur Bildaufnahme, also zum optischen System mit Überstrom gepulst bzw. angesteuert werden können, oder konstant leuchten. Bevorzugter Weise ist vorgesehen, dass die Lichtquelle und das optische System, also die Kamera über die Bildverarbeitungs- und Steuereinheit gekoppelt sind, so dass die Kamera stets ein ausgeleuchtetes Verschlusselement aufnimmt, und so dass die Lichtquelle aufleuchtet bzw. synchron zur Bildaufnahme einen Lichtblitz emittiert.

In der erfindungsgemäßen Ausgestaltung weist die hohlwellige Packtulpe ein in ihrem Inneren angeordnetes lichtleitendes Element auf. Bei dieser Ausgestaltung erstreckt sich das Lichtleitelement von der Kopfseite der Packtulpe in Richtung zu ihrer Fußseite. Kopfseitig kann die Lichtquelle, vorzugsweise direkt an dem Lichtleitelement anliegend, angeordnet sein, wobei die Lichtquelle bevorzugt als geschlossene Ringlichtbeleuchtung (vorzugsweise LED) ausgeführt ist, worauf weiter unten näher eingegangen wird. Von der Kopfseite in Richtung zur Fußseite weist das Lichtleitelement bevorzugt eine Abdeckung auf, welche vor der Fußseite endet, so dass ein Überstand des Lichtleitelementes gebildet ist, aus welchem das eingekoppelte Licht austreten, und den Innenbereich der Packtulpe, bzw. den Innenbereich der Tulpenglocke bevorzugt homogen ausleuchten kann.

Das Lichtelement kann als Lichtleitrohr aus einem geeigneten Lichtleitmaterial, wie zum Beispiel aus einem Plexiglas gebildet sein, wobei aber auch ein Faserbündel als Lichtleitelement denkbar ist.

Um einen Austritt des Lichts aus dem Lichtleitelement heraus auch nach außen, bzw. zu benachbarten Packtulpen hin zu vermeiden, kann das Lichtleitelement auch an seiner Außenseite eine Abdeckung aufweisen, welche fußseitig mit dem Lichtleitelement bevorzugt bündig abschließt.

In bevorzugter Ausgestaltung ist jeder Packtulpe jeweils eine Lichtquelle zugeordnet, wobei wiederum lediglich ein einziges optisches System bzw. eine Kamera ausreichend ist, welche bevorzugt stationär an der Behälterbehandlungsvorrichtung angeordnet ist. Auch hier ist vorteilhaft, dass die Lichtquelle als Ringlichtbeleuchtung den Bauraum der Behälterbehandlungsanlage nicht erweitert.

Wie bereits gesagt ist die Lichtquelle als Ringlichtbeleuchtung so an dem kopfseitigen Ende des Lichtleitelementes angeordnet, dass das emittierte Licht rundum gleichmäßig direkt in das Lichtleitelement eingekoppelt wird. Mittels des Lichtleitelementes wird das Licht in den Bereich der Tulpenglocke geleitet, wo das Licht radial nach innen ausgekoppelt wird. In dem fußseitigen Bereich des Lichtleitelementes kann dieses angeschliffen sein, oder ein Prisma aufweisen, um eine Streuung des Lichts, und so eine weitere Verbesserung der homogenen Ausleuchtung zu erreichen. Zusätzlich kann die Innenfläche des Lichtleitelementes, bzw. dessen Überstandes und/oder des Prismas noch mit einem Diffusor oder anderen geeigneten Lichtstreuelementen belegt werden.

Das optische System ist oberhalb der Packtulpe, wie bereits angeführt, bevorzugt stationär angeordnet. Dem optischen System bzw. der Kamera ist in bevorzugter Ausgestaltung ein Kollimator zugeordnet. Zudem kann die Packtulpe auch noch zumindest eine Linse aufweisen, um den Strahlengang des optischen Systems bzw. der Kamera je nach Anforderung zu realisieren. Günstig ist, wenn jeweils eine Linse kopfseitig und einen weitere Linse fußseitig angeordnet ist.

Zweckmäßig ist, wenn an der Tulpenglocke bzw. an der entsprechenden Kontaktfläche zum Verschlusselement ein Dämpfungselement angeordnet ist, welches in einfachster Ausgestaltung als O-Ring ausgeführt ist, wobei die Tulpenglocke so ausgeführt ist, dass diese das Verschlusselement an dessen Seitenfläche kontaktiert, so dass ein störungsfreier "Blick" der Kamera auf die Deckelseite des Verschlusselementes sichergestellt ist. Das Dämpfungselement kann aus weißem oder transparentem, elastischem Kunststoff gebildet sein. Natürlich können auch mehrere Steg- oder kreisförmige Dämpfungselemente vorgesehen sein.

Natürlich weist die jeweilige Packtulpe ein Antriebssystem auf, welcher in bevorzugter Ausgestaltung an der Außenseite der Packtulpe zum Beispiel in der Ausgestaltung als magnetischer Direktantrieb angreift, um die Packtulpe mittels Hub- und/oder Drehantrieb anzutreiben.

Vorteilhaft ist vorgesehen, dass das Verschlusselement in einem Verschließer auf eine Mündungsöffnung des Behälters bzw. der Flasche aufgesetzt wird. So wird der Behälter bzw. die Flasche zur Etikettiermaschine bzw. zur Etikettiervorrichtung transportiert, bzw. an diese übergeben. Mittels der Zentriervorrichtung werden die Behälter, bevorzugt mittels bzw. durch die Packtulpe ausgerichtet. Die Deckelsitzinspektion kann vorteilhaft durch die hohle Packtulpe hindurch erfolgen, wobei eine Ausrichtung aufgrund des aufgenommenen Ist-Bildes bzw. der Ist-Daten nach erforderlichen Solldaten erfolgt. Vor den beiden zuletzt genannten Schritten kann eine Grobausrichtung erfolgen. Die Packtulpe und/oder Teile davon werden durch Lichteinkopplung zum Erstrahlen gebracht wird, so dass der Innenbereich ausgeleuchtet wird.

Weitere vorteilhafte Ausgestaltungen der Erfindung sind in den Unteransprüchen und der folgenden Figurenbeschreibung offenbart. Es zeigen:
Fig. 1 eine Behälterbehandlungsvorrichtung in einer perspektivischen Teilansicht,
Fig. 2 eine Packtulpe als Einzelheit in einem Längsschnitt,
Fig. 3 die Packtulpe aus Figur 2 mit daran angeordneten Linsen, und
Fig. 4 eine Packtulpe in einer weiteren Ausgestaltung in einem Längsschnitt.

In den unterschiedlichen Figuren sind gleiche Teile stets mit denselben Bezugszeichen versehen, weswegen diese in der Regel auch nur einmal beschrieben werden.

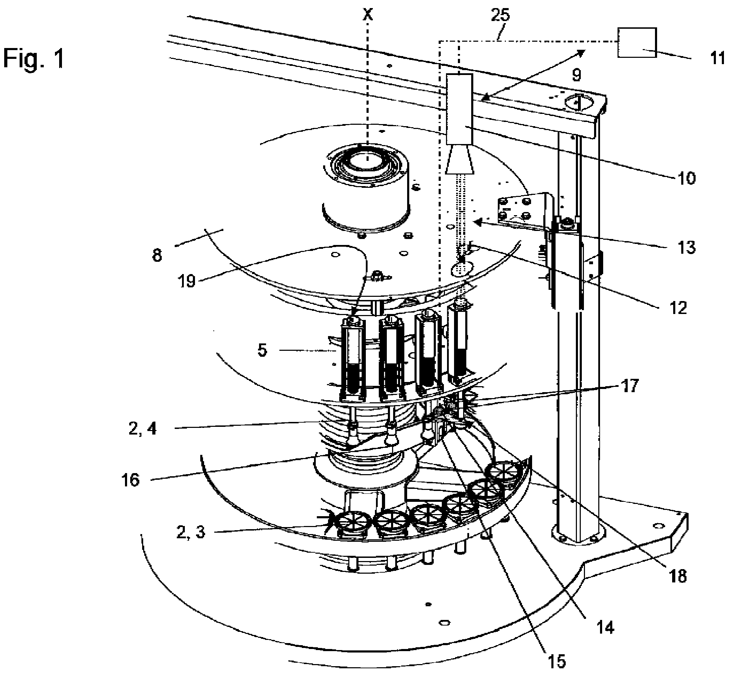

Figur 1 zeigt eine Behälterbehandlungsvorrichtung in einer beispielhaften Ausgestaltung als Etikettiermaschine bzw. Etikettierkreisel. Die Behälterbehandlungsvorrichtung weist mehrere Zentriervorrichtungen 2 mit jeweils einer Standfläche 3 und jeweils einer Packtulpe 4 auf.

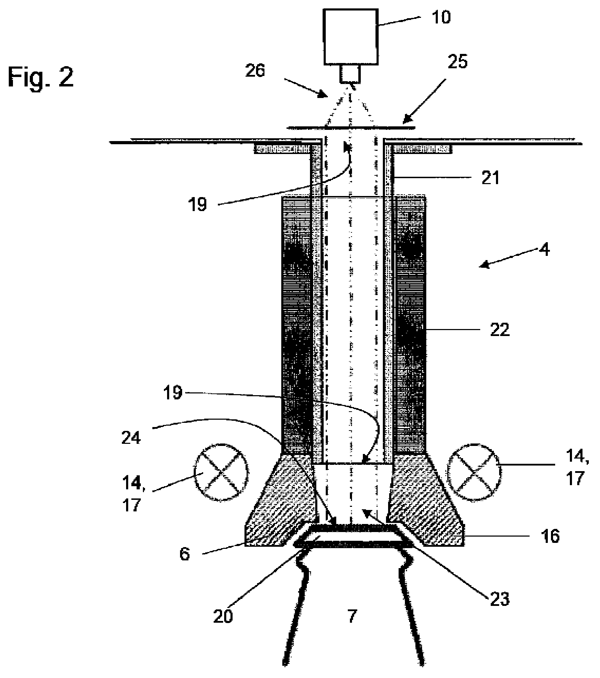

Die Standfläche 3 ist in bekannter Weise als Drehteller 3 ausgeführt, wobei die Packtulpe 4 an einer Antriebsvorrichtung 6 heb- und/oder drehbar gelagert ist. Mit den Zentriervorrichtungen 2 werden Behälter 7 (Figuren 2 bis 4), zum Beispiel Flaschen um die Mittelachse X der Behälterbehandlungsvorrichtung rotiert, und zum Beispiel Etikettieraggregaten zugeführt. Dabei stehen die Behälter 7 fußseitig auf dem jeweiligen Drehteller 3 und werden kopfseitig mittels der Packtulpe 4 gehalten. In den Figuren 2 bis 4 sind die Behälter 7, bzw. Flaschen lediglich ausschnittsweise mit ihrem Halsbereich gezeigt.

Die Behälterbehandlungsvorrichtung weist eine feststehende Kopfplatte 8 und ein Erfassungs- und Steuersystem 9 auf, welches ein optisches System 10, in der beispielhaften Ausgestaltung als Kamera 10, und eine Bildverarbeitungs- und Steuereinheit 11 aufweist.

Das optische System 10 ist stationär an der Behälterbehandlungsvorrichtung in der Zeichnungsebene oberhalb der Kopfplatte 8 angeordnet, und in geeigneter Weise festgelegt. Korrespondierend zur Anordnung des optischen Systems 10 ist in der Kopfplatte 8 eine Plattenöffnung 12 eingebracht, so dass das optische System 10 von oben durch die Kopfplatte 8 hindurch auf die Packtulpen 4, bzw. durch diese hindurch schauen kann, worauf weiter eingegangen wird, und was mittels den Linien 13 angedeutet ist. Der Strahlengang des optischen Systems 10 durch die Packtulpe 4 hindurch ist in den Figuren 2 bis 4 dargestellt. Wesentlich ist, dass mit dem oberhalb der Kopfplatte 8 angeordneten optischen System 10 durch die Plattenöffnung 12 und durch die Packtulpe 4 hindurch Verschlussansichten bzw. Deckelsitzinspektionen ermöglicht werden, wozu günstigen falls ein einziges, stationäres optisches System 10 bzw. eine einzige, stationäre Kamera 10 notwendig ist, um die Verschlussansichten der vorbeilaufenden Behälter 7 zu erhalten. In Figur 1 sind der Übersicht wegen weitere Zentriervorrichtungen 2 der Etikettiermaschine 1 nicht dargestellt.

Die Behälterbehandlungsvorrichtung weist eine stationär angeordnete Lichtquelle 14 auf, welche an einer Befestigungsvorrichtung 15 so angeordnet und ausgeführt ist, dass eine Tulpenglocke 16 der Packtulpe 4 beleuchtet wird, wenn diese an der Lichtquelle 14 vorbeigeführt wird. Die Lichtquelle 14 weist dazu zwei seitlich zur Tulpengiocke 16 angeordnete Beleuchtungsmittel 17 auf, welche jeweils gepulst einen Lichtstrahl 18 aussenden können, der in Figur 1 prinzipiell als Lichtblitz 18 dargestellt ist. Die Befestigungsvorrichtung 15 ist bevorzugt gabelartig mit zwei Gabelstegen ausgeführt, an denen jeweils ein Beleuchtungsmittel 17 korrespondierend zur Tulpenglocke 16 angeordnet ist, wobei das jeweilige Beleuchtungsmittel 17 quasi seitlich zur vorbeifahrenden Tulpenglocke 16 den Lichtblitz 18 erzeugt, und die Tulpenglocke 16 indirekt beleuchtet.

Wie Figur 2 zeigt, ist die jeweilige Packtulpe 4 als hohlwellige Packtulpe 4 ausgeführt, welche sowohl kopfseitig als auch fußseitig, also auch im Bereich der Tulpenglocke 16 Durchsichtöffnungen 19 aufweist. Insofern kann das optische System 10 bzw. die Kamera 10 von oben durch die Kopfplatte 8 und durch die hohlwellige Packtulpe 4 auf ein Verschlusselement 20, in der beispielhaften Ausgestaltung als Kronkorken, blicken, welcher seitlich, also an seiner schrägen Außenfläche mit der Tulpenglocke 16 in Kontakt steht. In Figur 2 ist der Übersicht wegen dieser Kontakt nicht dargestellt.

Die Tulpenglocke 16 ist zumindest teilweise, insbesondere vollständig aus einem transparenten Material, beispielsweise aus einem Plexiglas oder aus MakroIon gebildet. Die Packtulpe 4 weist einen Tulpenhalter 21 auf, welcher von einem Kunststoffrohr 22 umfasst ist.

Wird nun die entsprechende Packtulpe 4 an der Lichtquelle 14 und dem optischen System 10 vorbeigeführt, senden die Beleuchtungsmittel 17 den Lichtblitz 18 aus, so dass das emittierte Licht radial seitlich in die Tulpenglocke 16 eingekoppelt wird. Die Tulpenglocke 16 ist vorteilhaft als Lichtleitelement 6 ausgeführt, bzw. aus einem lichtleitenden Material (Lichtleitelement) 6 gebildet, so dass das eingekoppelte Licht an der Innenfläche der Tulpenglocke 16 ausgekoppelt wird, und den Innenbereich 23 der Tulpenglocke 16 ausleuchtet. So kann das optische System 10 auf die ausgeleuchtete Deckelseite 24 des Verschlusselementes 20 schauen und ein entsprechendes Bild aufnehmen. Hierzu sind die Lichtquelle 14 und das optische system 10, also die Kamera 10 über die Bildverarbeitungs- und Steuereinheit 11 miteinander verbunden, was mittels der gestrichelten Linie 25 angedeutet ist. So ist z.B. sichergestellt, dass Blitzlicht 18 und Bildaufnahme synchron erfolgen können, also dass eine Bildaufnahme bei beleuchtetem Verschlusselement 20 erfolgen kann. Beispielsweise kann an der Deckelseite 24 ein Dekor oder andere Gestaltungsmerkmale aufgebracht sein. Das von dem optischen System 10 aufgenommene Ist-Bild wird der Bildverarbeitungs- und Steuereinheit 11 zugeleitet in welcher die gelieferten Bilder oder Bilddaten ausgewertet werden. Die Verarbeitung der gelieferten Bilder oder Bilddaten erfolgt beispielsweise durch Vergleich mit in der Bildverarbeitungs- und Steuereinheit 11 abgespeicherten Solldaten. Die Bildverarbeitungs- und Steuereinheit 11 ist beispielsweise ein Rechner oder eine rechnergestützte Einheit mit entsprechenden Eingängen für analoge oder digitale von dem optischen System 10 gelieferten Daten. Weiter weist die Bildverarbeitungs- und Steuereinheit 11 einen nicht dargestellten Ausgang auf, welcher zum Beispiel mit der Antriebsvorrichtung 5 der jeweiligen Packtulpe 4 verbunden sein kann, um den Behälter 7 in einer Sollposition zu positionieren, also um ein entsprechendes Verdrehen des an der Packtulpe 4 gehaltenen Behälters 7 in die gewünschte Position zu erreichen. Möglich ist auch, wenn die Bildverarbeitungs- und Steuereinheit 11 mit dem Drehteller 3 in Verbindung steht, um so eine neu Positionierung des darauf aufstehenden Behälters 7 zu erreichen. Zudem können von der Bildverarbeitungs- und Steuereinheit 11 Kontrollen hinsichtlich der Sitzqualität des Verschlusselementes 20 auf der Behältermündung durchgeführt werden, um so Behälter 7 mit fehlsitzenden Verschlusselementen 20 nachfolgend gegebenenfalls von einer Etikettierung freizuhalten und/oder nachfolgend ausschleusen zu können.

Wie der Figur 2 weiter entnommen werden kann, ist dem stationären, optischen System 10 bzw. der Kamera 10 noch ein Kollimator 25 zugeordnet. Der Tulpenhalter 21 ist als Hohlrohr mit kopfseitig angeordnetem Flansch ausgeführt. Der Strahlengang 26 des optischen Systems 10 bzw. der Kamera 10 ist mittels der gestrichelten Linien 26, welche den Linien 13 aus Figur 1 entsprechen, dargestellt.

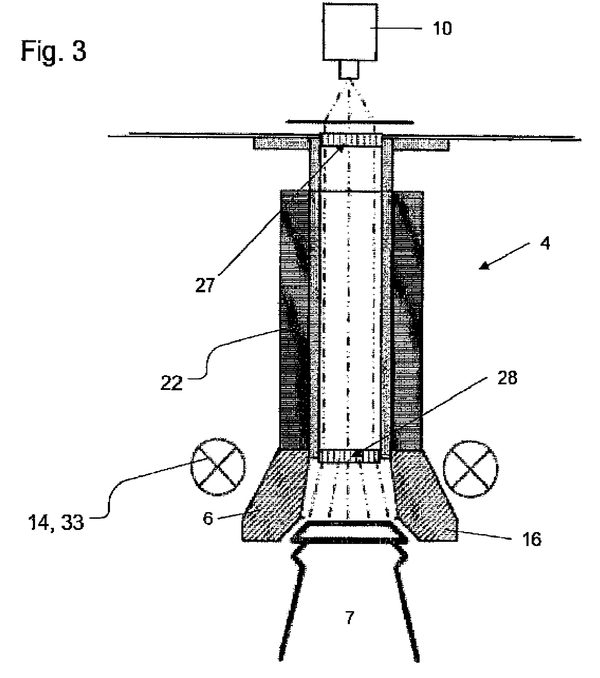

In Figur 3 weist die hohlwellige Packtulpe 4 kopfseitig sowie fußseitig jeweils Linsen 27 und 28 auf, wobei die Linse 27 als Eintrittslinse 27 an der kopfseitigen Durchsichtöffnung 19 angeordnet ist. Beide Linsen 27 und 28 sind in dem hohlwelligen Tulpenhalter 21 angeordnet, wobei die Linse 28 als Austrittslinse 28 ausgeführt ist.

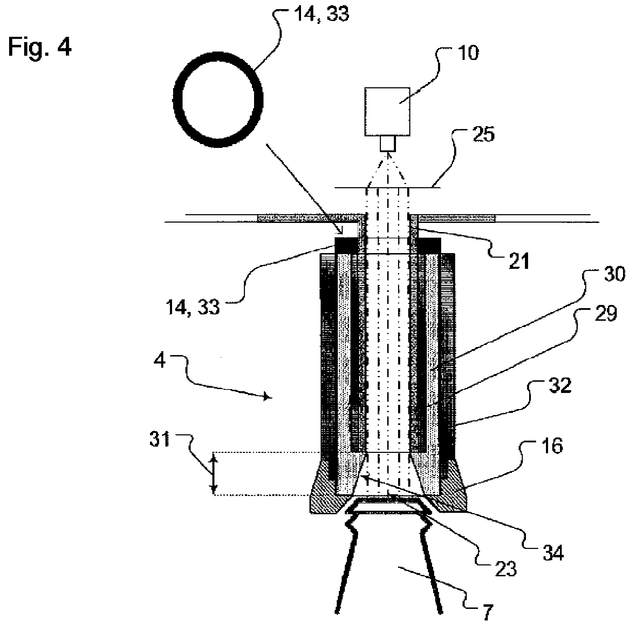

Eine weitere Ausgestaltung der hohlwelligen Packtulpe 4 zeigt Figur 4.

Die hohlwellige Packtulpe 4 weist wie zuvor einen hohlen Tulpenhalter 21 auf, welcher im Längsschnitt gesehen zylinderförmig ausgeführt ist. Dieser ist beispielhaft von einem inneren Schutz- und Führungsrohr 29 umfasst, welches fußseitig mit dem Tulpenhalter 21 bündig abschließt. Das innere Schutz- und Führungsrohr 29 ist lediglich optional, und besteht aus einem Kunststoff, wohin gegen der Tulpenhalter 21, wie zuvor, aus einem Edelstahl gebildet sein kann. Natürlich sind genannte Materialangaben lediglich beispielhaft zu verstehen. Das optionale Schutz- und Führungsrohr 29 ist außenseitig von einem Lichtleitelement 30 umfasst. Das Lichtleitelement 30 ist beispielhaft als Plexiglasrohr ausgeführt, kann aber auch aus einem Faserbündel bestehen.

Das Lichtleitelement 30 erstreckt sich von der Kopfseite der Packtulpe 4 in Richtung zur gegenüberliegenden Fußseite, wobei das Lichtleitelement 30 mit einem Überstand 31 über die untere Kante des Tulpenhalters 21 und des optionalen Schutz- und Führungsrohrs 29 übersteht. Das Lichtleitelement 30 ist außenseitig von einem äußeren Schutzrohr 32 umgeben. Mit dem äußeren Schutzrohr 32 steht die Tulpenglocke 16 in Verbindung. Bei dieser Ausgestaltung kann die Tulpenglocke 16 aus einem Standardmaterial gebildet sein, muss also nicht als Lichtleitelement ausgeführt sein.

Kopfseitig ist dem Lichtleitelement 30 die Lichtquelle 14 zugeordnet, welche in diesem Ausführungsbeispiel als Ringlichtbeleuchtung 33 ausgeführt ist. Diese Ringlichtbeleuchtung kann bspw. als ein LED-Kranz aus einer Vielzahl von Einzel-LED gebildet sein. Die Ringlichtbeleuchtung 33 ist so ausgeführt und angeordnet, dass emittiertes Licht direkt und rundum gleichmäßig kopfseitig in das Lichtleitelement 30 eingekoppelt wird. Die Lichtquelle 14, bzw. die Ringlichtbeleuchtung 33 kann konstant leuchten, kann aber auch mit der Bildverarbeitungs- und Steuereinheit 11 in Verbindung zu stehen, um so synchron zur Bildaufnahme des optischen Systems 11 aufzuscheinen bzw. aufzublitzen.

Über das Lichtleitelement 30 wird das eingekoppelte Licht in Richtung zum Überstand 31 geleitet, wo das Licht ausgekoppelt wird, und den Innenbereich 23 der Tulpenglocke 16 ausleuchtet. Insofern kann das optionale Schutz- und Führungsrohr 29 bzw. der Tulpenhalter 21 mit seinem zylindrischen Abschnitt und/oder das äußere Schutzrohr 32 auch als Abdeckelement bzw. Abdeckung für das Lichtleitelement 30 bezeichnet werden, welches eine Lichtauskopplung aus dem Lichtleitelement 30 in Hochrichtung gesehen vor dem Überstand 31 nach innen bzw. nach außen vermeiden kann.

Wie bereits gesagt, tritt das kopfseitig eingekoppelte Licht an dem Überstand 31 aus dem Lichtleitelement 30 nach innen aus. Bevorzugt wird das Licht hier mittels mehrfach Reflexionen seitlich schräg ausgekoppelt. Wie in Figur 4 beispielhaft dargestellt, kann das Lichtleitelement 30 an seinem Überstand 31 einen Anschliff aufweisen, so dass quasi ein Prisma 34 bzw. ein Streuprisma 34 gebildet ist, um so eine homogene Ausleuchtung des Innenbereichs bzw. ein homogenes Anleuchten des Verschlusselementes 20 bzw. seines deckelseitigen Dekors zu erreichen. Das Prisma 34 kann auch als separates Element ausgeführt sein, und in geeigneter Weise an der Innenfläche des Überstandes 31 festgelegt sein. Möglich ist auch, die Innenfläche des Überstandes 31 bzw. des Prismas 34 mit einem Diffusormaterial zu belegen. Eine homogene Ausleuchtung ist insbesondere bei spiegelnden Oberflächen sinnvoll.

Natürlich kann auch bei dem Ausführungsbeispiel zu Figur 4 Linsen 27 bzw. 28 wie bei dem Ausführungsbeispiel zu Figur 3 vorgesehen werden.

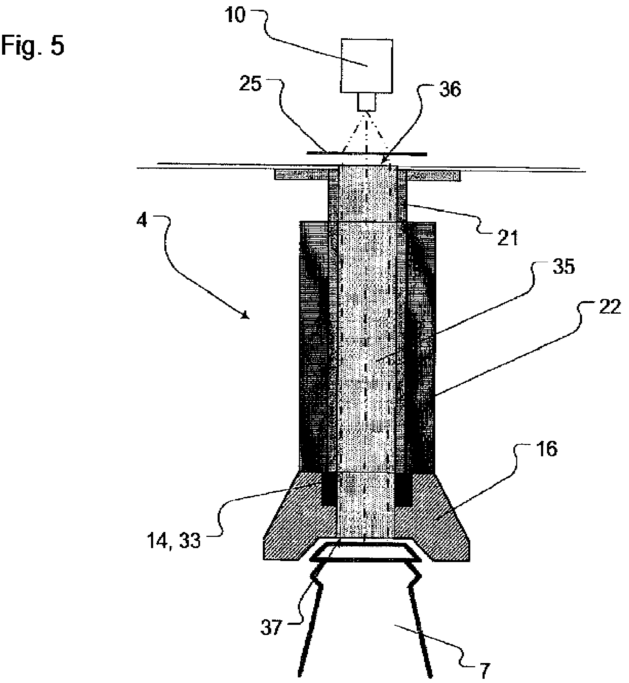

Die in Figur 5 gezeigte Variante der erfindungsgemäßen Vorrichtung sieht einen Durchsichtzylinder 35 vor, der aus dem gleichen Material wie die Deckelsichtstulpe 16 oder einem anderen geeigneten transparenten Material gefertigt ist. In dem in Figur 5 gezeigten Beispiel hat dieser Durchsichtzylinder 35 keine konkaven oder konvexen Eigenschaften, diese können aber durch geeignete Schliffe an den Stirnseiten vorsehen werden, um vorteilhafte Linseneffekte zu erreichen.

Die Ringlichtbeleuchtung 33 ist in der gezeigten Variante mehrstöckig ausgeführt bzw. angeordnet, so dass emittiertes Licht direkt und rundum gleichmäßig kopfseitig in den Durchsichtzylinder 35 eingekoppelt wird. Die Ringlichtbeleuchtung 33 ist mit nicht dargestellten Leitungen elektrisch- und steuerungstechnisch verbunden. Die Lichtquelle 14, bzw. die Ringlichtbeleuchtung 33 kann konstant leuchten, kann aber auch mit der Bildverarbeitungs- und Steuereinheit 11 in Verbindung zu stehen, um so synchron zur Bildaufnahme des optischen Systems 11 aufzuscheinen bzw. aufzublitzen. Natürlich kann auch eine Beleuchtung vorgesehen werden, die analog dem in Figur 2 gezeigten Beispiel von außen Licht in die Tulpeglocke 16 und nachfolgend in den Durchsichtzylinder 35 einkoppelt.

Für eine optimale Lichteinkopplung in den Durchsichtzylinder 35 und nachfolgenden Ausleuchtung des gewünschten Untersuchungsfensters, z.B. einen Kronkorken 20, ist es ggf. nötig, die äußere Zylinderfläche des Durchsichtzylinder 35 im Bereich der Ringleuchte 33 aufzurauen oder anzuätzen, so dass Reflexionen vermieden werden. Insbesondere ist es von Vorteil, die Stirnseiten 36 und 37 des Durchsichtzylinders 35 hochwertig zu polieren, z.B. mittels eines Elektropolierverfahrens, um optimale optische Eigenschaften zu erreichen. Natürlich kann es vorgesehen werden, die Tulpe 16 und den Durchsichtzylinder 35 aus einem einzigen Stück zu fertigen.

Der Vorteil der Version gemäß Figur 5 besteht darin, dass im Inneren der ansonsten holen Packtulpe 4 keine Verschmutzungen oder Anlagerungen stattfinden können.

Mit der Erfindung wird die Möglichkeit geboten, mittels zumindest einer Lichtquelle 14 in Zusammenwirken mit dem jeweiligen Lichtleitelement 6 bzw. 30 bzw. mit der erfindungemäßen, zumindest teilweisen lichtleitenden Ausbildung der Packtulpe 4 bzw. mit der vorteilhaften Ausgestaltung der Packtulpe 4 mit lichtleitenden Elementen, das Verschlusselement 20, bzw. dessen deckelseitiges Dekor auszuleuchten, wobei mittels der Kamera 10 das Bild des Verschlusselements 20, bzw. dessen deckelseitigen Dekors von oben durch die Kopfplatte 8 und durch die Packtulpe 4 hindurch abgebildet wird, um das aufgenommene Bild zu Inspektionszwecken zu nutzen. Beispielweise kann der Behälter 7 nach Deckelmerkmalen ausgerichtet werden, wobei auch eine Qualitätskontrolle (Deckelsitz) durchführbar ist. Auch ist das Verschlusselement 20 mittels der Packtulpe bzw. der Tulpenglocke in die gewünschte Position überführbar (Verschließer).

Insofern ist die Behelterbehandlungsvorrichtung nicht auf die beschriebene Etikettiermaschine beschränkt. Beispielsweise kann die Behälterbehandlungsvorrichtung auch als Verschließer ausgeführt sein, bei welcher mit der Erfindung Verschlussansichten durch eine Plattenöffnung von oben durch die Packtulpe 4 hindurch ermöglicht werden. Insbesondere können naturlich auch die einzelnen Elemente der Packtulpe 4, wie diese an dem jeweiligen Beispiel der Figuren 1 bis 5 gezeigt sind, in geeigneter Weise untereinander kombiniert, ersetzt oder ergänzt gezeigt werden, ohne dadurch den durch die nachfolgenden Ansprüche definierten Schutzumfang zu verlassen.

### Bezugszelchenliste

- 2: Zentriervorrichtung
- 3: Standfläche (Drehteller)
- 4: Packtulpe
- 5: Antriebsvorrichtung
- 6: Lichtleitelement
- 7: Behälter
- 8: Kopfplatte v. 1
- 9: Erfassungs- Steuersystem
- 10: Optisches System
- 11: Bildverarbeitungs- und Steuereinheit
- 12: Plattenöffnung in 8
- 13: Sichtweg optisches System
- 14: Lichtquelle
- 15: Befestigungsvorrichtung für 14
- 16: Tulpenglocke
- 17: Beleuchtungsmittel
- 18: Lichtblitz
- 19: Durchsichtöffnungen in 4
- 20: Verschlusselement
- 21: Tulpenhalter
- 22: Kunststoffrohr
- 23: Innenbereich von 16
- 24: Deckelseite
- 25: Verbindung 10 und 14 mit 11
- 26: Strahlengang von 10 in 4
- 27: Linse+
- 28: Linse
- 29: Schutz- und Führungsrohr
- 30: Llchtleltelement
- 31: Überstand v. 30
- 32: Äußeres Schutzrohr
- 33: Ringlichtbeleuchtung
- 34: Prisma
- 35: Durchsichtzylinder
- 36: Stirnseite
- 37: Stirnseite

## Patentansprüche

1. Behälterbehandlungsvorrichtung welche zumindest eine Zentriervorrichtung (2) mit einer Standfläche (3) und einer Packtulpe (4) aufweist, und zwar derart, dass Behälter (7) fußseitig auf der jeweiligen Standfläche (3) aufstellbar und mittels der Packtulpe (4) kopfseitig gehalten werden können, wobei zumindest ein Erfassungs- und Steuersystem (9), aufweisend zumindest ein optisches System (10) vorgesehen ist, wobei die Packtulpe (4) sowohl kopfseitig als auch fussseitig Durchsichtöffnungen (19) aufweist, **dadurch gekennzeichnet, dass** die Packtulpe (4) einen hohlen Tulpenhalter (21) aufweist, durch den der Strahlengang des optischen Systems (10) führt, und in einem Inneren der Packtulpe ein lichtleitendes Element (30) angeordnet ist, das sich von einer Kopfseite in Richtung zu einer dazu gegenüberliegenden Fußseite erstreckt, und den Tulpenhalter außenseitig umfasst, wobei das lichtleitende Element (30) mit einem Überstand (31) über die untere Kante des Tulpenhalters (21) übersteht, und von einem äußeren Schutzrohr (32) außenseitig umgeben ist, und zumindest eine Lichtquelle (14,17; 14,33) vorgesehen Ist, die so angeordnet ist, dass Licht in das lichtleitende Element (30) eingekoppelt wird, wobei ein Innenbereich (23) einer Tulpenglocke (16) der Packtulpe (4) durch sich auskoppelndes Licht ausleuchtbar ist, so dass eine am fussseitigen Ende der Packtulpe (4) anordbare Deckelseite (24) eines mittels der Packtulpe (4) gehalten Behälters durch das optische System (10), und durch die Packtulpe (4) hindurch und mittels des lichtleitenden Elementes (30), inspizierbar ist.

2. Behälterbehandlungsvorrichtung nach Anspruch 1 , **dadurch gekennzeichnet, dass** das optische System (10) stationär angeordnet ist.

3. Behälterbehandlungsvorrichtung nach Anspruch 1 oder 2, **dadurch gekennzeichnet, dass** die zumindest eine Lichtquelle (14,17) stationär angeordnet ist.

4. Behälterbehandlungsvorrichtung nach einem der vorhergehenden Ansprüche, **dadurch gekennzeichnet, dass** die Deckelseite (24) bzw. der ausgeleuchtete Innenbereich (23) mittels des optischen Systems (10) durch eine Plattenöffnung (12) einer Kopfplatte (8) der Behälterbehandlungsvorrichtung (1) und durch die Packtulpe (4) hindurch inspizierbar ist.

5. Behälterbehandlungsvorrichtung nach einem der vorhergehenden Ansprüche, **dadurch gekennzeichnet, dass** das lichtleitende Element (30) aus einem transparentem Stoff, insbesondere einem transparenten Kunststoff, bevorzugt aus Plexiglas oder Macrolon gebildet ist.

6. Behälterbehandlungsvorrichtung nach einem der vorhergehenden Ansprüche, **dadurch gekennzeichnet**, das die Lichtquelle (14,33) als Ringlichtbeleuchtung (33) an der Kopfseite des Lichtleitelementes (30) angeordnet ist.

7. Behälterbehandlungsvorrichtung nach einem der vorhergehenden Ansprüche, **dadurch gekennzeichnet, dass** aus dem Überstand (31) das mittels der Lichtquelle (14,33) eingekoppelte Licht austritt, und den Innenbereich (23) ausleuchtet.

8. Behälterbehandlungsvorrichtung nach einem der vorhergehenden Ansprüche, **dadurch gekennzeichnet, dass** die Lichtquelle (14,17; 14,33) und das optische System (10) so synchronisiert angesteuert werden, dass das optische System (10) stets einen ausgeleuchteten Innenbereich (23) inspiziert.

9. Behälterbehandlungsvorrichtung nach einem der vorhergehenden Ansprüche, **dadurch gekennzeichnet, dass** die Lichtquelle (14,17; 14,33) konstant leuchtet, so dass das lichtleitende Element (30) den Innenbereich (23) konstant ausleuchtet.

10. Behälterbehandlungsvorrichtung nach einem der vorhergehenden Ansprüche, **dadurch gekennzeichnet, dass** kopfseitig und/oder fussseitig im Bereich der Durchsichtöffnungen (19) optische Linsen (27, 28) vorgesehen sind.

11. Behälterbehandlungsvorrichtung nach Anspruch 10, **dadurch gekennzeichnet, dass** fussseitig mindestens eine Linse (28) vorgesehen ist, die die Strahlungen aufweitet, so dass eine Schattenfläche unterhalb der Linse (28) inspizierbar ist, deren Durchmesser grösser ist, als der freie Querschnitt vor der Linse (28).

12. Behälterbehandlungsvorrichtung nach einem der vorhergehenden Ansprüche, **dadurch gekennzeichnet, dass** der innere Kern der Packtulpe (4) aus einem Durchsichtzylinder (35) gebildet ist, welcher aus einem transparenten Material gebildet ist, insbesondere einen transparenten Ku nststoff, Glas oder Kristall.

13. Verfahren zur Inspektion von Flaschen, Behältern usw. einer Behälterbehandlungsvorrichtung (1) **dadurch gekennzeichnet, dass** eine Behälterbehandlungsvorrichtung nach einem der vorbenannten Ansprüche verwendet wird, umfassend zumindest die Schritte:
a) Aufsetzen eines Verschlusselementes (20) auf den Behälter (7) in einem Verschliesser;
b) Transport bzw. Übergabe des Behälters (7) an eine Etikettiervorrichtung (1);
c) Zentrierung des Behälters (7) mittels der Zentriervorrichtung (2), insbesondere aufstehend auf der Standfläche (3) und mittels der den Behälter haltenden Packtulpe (4);
d) Deckelsitzinspizierung mittels des optischen Systems (10) durch die Packtulpe (4) hindurch, wobei eine Lichtquelle derart angeordnet ist, dass Licht in die lichtleitenden Elemente der Packtulpe eingekoppelt und in einen Innenbereich (23) einer Tulpenglocke (16) der Packtulpe (4) ausgekoppelt wird, so dass der Innenbereich ausgeleuchtet wird;
e) Ausrichten des Behälters (7) gemäß einer erforderlichen Sollposition.

14. Verfahren nach Anspruch 13, **dadurch gekennzeichnet, dass** vor Durchführung des Schrittes d) und/oder e) eine Grobausrichtung des Behälters (7) erfolgt.

15. Verfahren nach Anspruch 13 oder 14, **dadurch gekennzeichnet, dass** in einer Kopfplatte (8) der Behalterbehandlungsvorrichtung (1) eine Plattenöffnung (12) eingebracht ist, durch welches das optische System (10) durch die Packtulpe (4) hindurch die Deckelsitzinspektion durchführt.

## Claims

1. Container handling device, comprising at least one centering device (2) with a standing surface (3) and a bottle gripper (4), such that that containers (7) can be stood upright on the foot side of the respective standing surface (3) and on the head side can be held by the bottle gripper (4), and including at least one optical system (10), wherein the bottle gripper (4) comprises inspection openings (19) on both the head side and the foot side, **characterised in that** the bottle gripper (4) comprises a hollow tulip-type holder (21) through which the beam path of the optical system (10) is guided, and a light-conducting element (30) arranged in the interior of the bottle gripper, which extends from a head side in the direction towards an opposing foot side, and encompasses the tulip-type holder on the outside, wherein the light-conducting element (30) projects by a projection (31) over the lower edge of the tulip-type holder (21), and is surrounded on the outside by an external protective tube (32), and at least one light source (14, 17; 14, 33) is provided which is arranged in such a way that light is coupled into the light-conducting element (30), wherein an inner area (23) of a tulip bell (16) of the bottle gripper (4) can be illuminated by coupled-out light, such that a cover side (24), which can be arranged at the footside end of the bottle gripper (4), of a container held by the bottle gripper (4) can be inspected by the optical system (10), through the bottle gripper (4) and by means of the light-conducting element (30).

2. Container handling device according to claim 1, **characterised in that** the optical system (10) is arranged stationary.

3. Container handling device according to claim 1 or 2, **characterised in that** the at least one light source (14, 17) is arranged stationary.

4. Container handling device according to any one of the preceding claims, **characterised in that** the cover side (24) and the illuminated inner area (23) respectively can be inspected by means of the optical system (10) through a plate opening (12) of a head plate (8) of the container handling device (1) and through the bottle gripper (4).

5. Container handling device according to any one of the preceding claims, **characterised in that** the light-conducting element (30) is formed from a transparent material, in particular a transparent plastic, preferably from Plexglas or Macrolon.

6. Container handling device according to any one of the preceding claims, **characterised in that** the light-source (14, 33) is arranged as a ring light illumination (33) at the head side of the light-conducting element (30).

7. Container handling device according to any one of the preceding claims, **characterised in that** the light coupled in by means of the light source (14, 33) emerges from the projection (31), and illuminates the inner area (23).

8. Container handling device according to any one of the preceding claims, **characterised in that** the light source (14, 17; 14, 33) and the optical system (10) are actuated in a synchronized manner in such a way that the optical system (10) always inspects an illuminated inner area (23).

9. Container handling device according to any one of the preceding claims, **characterised in that** the light source (14, 17; 14, 33) is constantly providing light, such that the light-conducting element (30) constantly illuminates the inner area (23).

10. Container handling device according to any one of the preceding claims, **characterised in that** optical lenses (27, 28) are provided at the head side and/or the foot side in the region of the inspection openings (19).

11. Container handling device according to claim 10, **characterised in that** on the foot side at least one lens (28) is provided, which expands the beams, such that a shadow surface beneath the lens (28) can be inspected, the diameter of which is greater than the free cross-section in front of the lens (28).

12. Container handling device according to any one of the preceding claims, **characterised in that** the inner core of the bottle gripper (4) is formed from a transparent cylinder (35), which is formed from a transparent material, in particular a transparent plastic, glass, or crystal.

13. Method for the inspection of bottles, containers, and the like with a container handling device (1), **characterised in that** a container handling device according to one of the preceding claims is used, comprising at least the steps:
a) placing of a closure element (20) onto the container (7) in a closing device;
b) transport and handover of the container (7) to a labelling device (1);
c) centering of the container (7) by means of the centering device (2), in particular standing upright on the standing surface (3) and by means of the bottle gripper (4) holding the container;
d) inspection of the seating of the cover by means of the optical system (10) through the bottle gripper (4), wherein a light source is arranged in such a way that light is coupled into the light-conducting elements of the bottle gripper and coupled out into an inner area (23) of a tulip-type bell (16) of the bottle gripper (4), such that the inner area is illuminated;
e) alignment of the container (7) in accordance with a desired reference position.

14. Method according to claim 13, **characterised in that**, before step d) and/or e) is carried out, a rough alignment of the container (7) takes place,

15. Method according to claim 13 or 14, **characterised in that** a plate opening (12) is introduced into a head plate (8) of the container handling device (1), through which the optical system (10) carries out the inspection of the seat of the cover, through the bottle gripper (4).

## Revendications

1. Dispositif de traitement de contenant, qui présente au moins un dispositif de centrage (2) pourvu d'une surface d'appui (3) et d'une tulipe de préhension (4), à savoir de telle manière que des contenants (7) peuvent être placés côté base sur la surface d'appui (3) concernée et peuvent être maintenus côté tête au moyen de la tulipe de préhension (4), sachant qu'est prévu au moins un système de détection et de commande (9), présentant au moins un système optique (10), sachant que la tulipe de préhension (4) présente aussi bien côté tête que côté base des ouvertures transparentes (19), **caractérisé en ce**
**que** la tulipe de préhension (4) présente un support de tulipe (21) creux, à travers lequel la trajectoire de rayons du système optique (10) mène,
et en ce qu'un élément conducteur de lumière (30) est disposé à l'intérieur de la tulipe de préhension, lequel s'étend depuis un côté de tête en direction d'un côté de base lui faisant face et qui comprend côté extérieur le support de tulipe, sachant que l'élément conducteur de lumière (30) dépasse par un débord (31) de l'arête inférieure du support de tulipe (21) et est entouré côté extérieur par un tube de protection (32) extérieur, et
en ce qu'au moins une source de lumière (14, 17 ; 14, 33) est prévue, laquelle est disposée de telle sorte que la lumière est injectée dans l'élément conducteur de lumière (30), sachant qu'une zone intérieure (23) d'une cloche de tulipe (16) de la tulipe de préhension (4) peut être éclairée par la lumière se découplant, de sorte qu'un côté de couvercle (24), pouvant être disposé au niveau de l'extrémité côté base de la tulipe de préhension (4), d'un contenant maintenu au moyen de la tulipe de préhension (4) peut être inspecté par le système optique (10), et à travers la tulipe de préhension (4) et au moyen de l'élément conducteur de lumière (30).

2. Dispositif de traitement de contenant selon la revendication 1, **caractérisé en ce que** le système optique (10) est disposé de manière stationnaire.

3. Dispositif de traitement de contenant selon la revendication 1 ou 2, **caractérisé en ce que** la au moins une source de lumière (14, 17) est disposée de manière stationnaire.

4. Dispositif de traitement de contenant selon l'une quelconque des revendications précédentes, **caractérisé en ce que** le côté de couvercle (24) ou la zone intérieure (23) éclairée peuvent être inspectés au moyen du système optique (10) à travers une ouverture de plaque (12) d'une plaque de tête (8) du dispositif de traitement de contenant (1) et à travers la tulipe de préhension (4).

5. Dispositif de traitement de contenant selon l'une quelconque des revendications précédentes, **caractérisé en ce que** l'élément conducteur de lumière (30) est formé à partir d'un matériau transparent, en particulier d'une matière plastique transparente, de manière préférée à partir de plexiglas ou de macrolon.

6. Dispositif de traitement de contenant selon l'une quelconque des revendications précédentes, **caractérisé en ce que** la source de lumière (14, 33) est disposée, en tant qu'éclairage circulaire (33), au niveau du côté de tête de l'élément conducteur de lumière (30).

7. Dispositif de traitement de contenant selon l'une quelconque des revendications précédentes, **caractérisé en ce que** la lumière injectée au moyen de la source de lumière (14, 33) sort du débord (31) et éclaire la zone intérieure (23).

8. Dispositif de traitement de contenant selon l'une quelconque des revendications précédentes, **caractérisé en ce que** la source de lumière (14, 17 ; 14, 33) et le système optique (10) sont commandés de manière synchronisée de telle sorte que le système optique (10) inspecte systématiquement une zone intérieure (23) éclairée.

9. Dispositif de traitement de contenant selon l'une quelconque des revendications précédentes, **caractérisé en ce que** la source de lumière (14, 17 ; 14, 33) éclaire de manière constante, de sorte que l'élément conducteur de lumière (30) éclaire de manière constante la zone intérieure (23).

10. Dispositif de traitement de contenant selon l'une quelconque des revendications précédentes, **caractérisé en ce que** sont prévues, côté tête et/ou côté base, dans la zone des ouvertures transparentes (19), des lentilles (27, 28) optiques.

11. Dispositif de traitement de contenant selon la revendication 10, **caractérisé en ce qu'**est prévue, côté base, au moins une lentille (28), qui élargit les rayonnements, de sorte qu'une surface ombrée sous la lentille (28) peut être inspectée, dont le diamètre est plus grand que la section transversale libre devant la lentille (28).

12. Dispositif de traitement de contenant selon l'une quelconque des revendications précédentes, **caractérisé en ce que** la partie centrale intérieure de la tulipe de préhension (4) est formée à partir d'un cylindre transparent (35), qui est formé à partir d'un matériau transparent, en particulier à partir d'une matière plastique transparente, de verre ou de cristal.

13. Procédé servant à inspecter des bouteilles, des contenants ou un dispositif de traitement de contenant (1), **caractérisé en ce qu'**un dispositif de traitement de contenant selon l'une quelconque des revendications précédentes est utilisé, ledit procédé comprenant les étapes consistant à :
a) placer un élément de fermeture (20) sur le récipient (7) dans une fermeuse :
b) transporter ou transférer le contenant (7) à un dispositif à étiqueter (1) ;
c) centrer le contenant (7) au moyen du dispositif de centrage (2), en particulier à la verticale sur la surface d'appui (3) et au moyen de la tulipe de préhension (4) maintenant le contenant ;
d) inspecter le siège de couvercle au moyen du système optique (10) à travers la tulipe de préhension (4), sachant qu'une source de lumière est disposée de telle manière que la lumière est injectée dans les éléments conducteurs de lumière de la tulipe de préhension et est découplée dans une zone intérieure (23) d'une cloche de tulipe (16) de la tulipe de préhension (4) de sorte que la zone intérieure est éclairée ;
e) orienter le contenant (7) selon une position de consigne requise.

14. Procédé selon la revendication 13, **caractérisé en ce qu'**une orientation sommaire du contenant (7) est effectuée avant la mise en oeuvre de l'étape d) et/ou e).

15. Procédé selon la revendication 13 ou 14, caractérisé eh ce qu'une ouverture de plaque (12) est pratiquée dans une plaque de tête (8) du dispositif de traitement de contenant (1), par laquelle le système optique (10) met en oeuvre l'inspection de siège de couvercle à travers la tulipe de préhension (4).
